# EUROPÄISCHE PATENTSCHRIFT

(11) **EP 3 194 254 B1**
(45) Veröffentlichungstag und Bekanntmachung des Hinweises auf die Patenterteilung: **07.11.2018**
(21) Anmeldenummer: 15787894.3
(22) Anmeldetag: 04.09.2015
(51) Int. Cl.: B60J 10/00, B23P 19/04

(54) **VORRICHTUNG ZUM MONTIEREN EINES GUMMIPROFILS BZW. DICHTUNGSPROFILS**
DEVICE FOR MOUNTING A SEAL PROFILE
DISPOSITIF POUR L'ASSEMLBAGE D'UN JOINT D'ÉTANCHÉITÉ

(30) Priorität: 18.09.2014 DE 102014113509
(43) Veröffentlichungstag der Anmeldung: 26.07.2017
(73) Patentinhaber: AyTec Automation GmbH, 93098 Mintraching (DE)
(72) Erfinder: RUHLAND, Christian, 93161 Sinzing (DE)
(74) Vertreter: Glück Kritzenberger Patentanwälte PartGmbB
(86) Internationale Anmeldenummer: PCT/DE2015/100371
(87) Internationale Veröffentlichungsnummer: WO 2016/041548

(56) Entgegenhaltungen:
- EP-A2- 0 894 563
- EP-A2- 1 361 648
- EP-A2- 1 821 395
- WO-A1-2014/085401
- CN-B- 101 309 828
- DE-A1-102006 056 276
- US-A- 5 018 264

## Beschreibung

Die Erfindung betrifft eine Vorrichtung zum Applizieren eines Gummiprofils auf einen Träger. Derartige Vorrichtungen werden insbesondere im Automobilbau benötigt, wo Gummidichtungen auf Türeinfassungen oder Kofferraumeinfassungen eines Kraftfahrzeugchassis aufgebracht werden müssen. Derartige Vorrichtungen enthalten in der Regel eine Führungsvorrichtung, die üblicherweise einen Roboterarm umfasst, der mit mehreren Freiheitsgraden bewegbar ist und daher in der Lage ist, das Gummiprofil exakt an der aufzubringenden Stelle der Türeinfassung oder Kofferraumeinfassung entlang zu führen, auch wenn diese Stellen nicht in einer Ebene liegen. Des Weiteren hat die Führungsvorrichtung ein Führungselement, welches das Gummiprofil an einer definierten Stellung relativ zum Träger zuführt. Ein derartiges Führungselement ist häufig durch einen Führungskopf mit üblicherweise mehreren Führungsrollen gebildet.

Die Vorrichtung enthält weiterhin eine Vorschubvorrichtung, um das Gummiprofil mit einer gewissen Stauchung dem Träger zuzuführen. Bislang wird hierfür ein Motorantrieb verwendet, der derart angesteuert wird, dass er das Gummiprofil ein klein wenig schneller ausstößt als der Bewegungsgeschwindigkeitdes Führungselements relativ zum Träger entspricht. Auf diese Weise wird das Gummiprofil beim Aufkleben auf den Träger ein wenig gestaucht, so dass es sich aufgrund interner Spannung im Gummiprofil nicht von dem Träger ablösen kann.

Um diese Stauchung reproduzierbar zu realisieren, wird ständig die Geschwindigkeit des Führungselements relativ zum Träger erfasst oder berechnet und die Vorschubvorrichtung entsprechend angesteuert. Die Geschwindigkeitssteuerung des Antriebsmotors der Treibrolle ist relativ aufwendig und erfordert eine genaue Erfassung der absoluten Geschwindigkeit des Führungselements bzw. -kopfes aus den Bewegungsdaten der unterschiedlichen Komponenten der Führungsvorrichtung.

Die DE 39 41 376, die EP 0 894 563 A2 als auch die US 5,201,106 zeigen eine Vorrichtung gemäß dem Oberbegriff des Anspruchs 1. Aus der WO 2014/085401 A1 ist es bekannt, den Liner eines Gummiprofils mit konstantem Drehmoment abzuziehen.

Es ist Aufgabe der vorliegenden Erfindung, eine Vorrichtung zum Applizieren eines Gummiprofils auf einen Träger zu schaffen, die auf einfache Weise eine zuverlässige Verklebung des Gummiprofils auf im Träger ermöglicht unter Vermeidung von axialen Spannungen im Gummiprofil.

Die Aufgabe wird durch eine Vorrichtung mit den Merkmalen des Anspruches 1 gelöst. Vorteilhafte Weiterbildungen sind Gegenstand der Unteransprüche.

Im Gegensatz zum Stand der Technik wird die mit dem Gummiprofil in Friktions-und/oder Formeingriff stehende Treibrolle bzw. das Treibrad nicht mehr durch einen Motor mit Geschwindigkeitsübersteuerung angetrieben, d.h. der derart angesteuert ist, dass er gegenüber der Geschwindigkeit des Führungselements bzw. -kopfes relativ zum Träger einen leichten Geschwindigkeitsüberschuss hat, sondern die Treibrolle wird mit einem konstanten Drehmoment angetrieben, unabhängig von der Geschwindigkeit des Führungselements. Ein derartiges konstantes Drehmoment lässt sich über eine Dauerschlupfkupplung erzielen, wie z.B. über eine Dauerschlupfkupplung nach dem magnetischen Hystereseprinzip.

Eine derartige Dauerschlupfkupplung hat den Vorteil, dass sie unabhängig von der Antriebsgeschwindigkeit immer das gleiche Drehmoment auf die Treibrolle überträgt. Es ist deshalb ausreichend, den Antriebsmotor für die Treibrolle immer mit einer größeren Geschwindigkeit (wenn diese direkt mittels der Treibrollen auf das Gummiprofile wirken würden) als der Geschwindigkeit des Führungselements relativ zum Träger laufen zu lassen. Die Dauerschlupfkupplung wandelt diesen Geschwindigkeitsunterschied in ein konstantes Drehmoment und ansonsten in Wirbelstromverluste um und sorgt damit dafür, dass unabhängig von der Abtriebsgeschwindigkeit, d.h. der Geschwindigkeit, mit welcher die Treibrolle auf das Gummi einwirkt und mit welcher das Gummiprofil auf den Träger überführt wird, immer das gleiche Drehmoment auf das Gummiprofil einwirkt. Dies hat zum einen den Vorteil, dass die Stauchung des Gummiprofils beim Aufbringen aufgrund des konstanten Drehmoments an jedem Punkt identisch ist, auch wenn das Führungselement entlang des Aufbringungswegs am Träger mit etwas unterschiedlicher Geschwindigkeit bewegt wird und dass zum anderen keine Erfassung der Geschwindigkeit des Führungselements relativ zum Träger mehr erfolgen muss, um eine gewünschte Stauchung des Gummiprofils beim Aufbringen auf den Träger zu realisieren.

Die Erfindung wird somit eine zuverlässige Aufbringung des Gummiprofils auf den Träger mit geringem Aufwand erzielt. Nachfolgend wird für den Begriff "Führungselement" die Bezeichnung "Führungskopf" verwendet.

Die Kraftübertragung von der Treibrolle auf das Gummiprofil findet in bekannter Weise über eine Antriebsfläche der Treibrolle statt, die in der Regel durch eine Umfangsfläche, insbesondere den Außenumfang der Treibrolle gebildet ist.

Vorzugsweise ist die Treibrolle in dem Führungselement unmittelbar vor dem Aufbringungsort des Gummiprofils auf dem Träger angeordnet. Dies bedeutet, dass der Weg von der Treibrolle bis zu der Stelle, wo das Gummiprofil auf dem Träger verklebt wird, nur sehr kurz ist, so dass das aufgebrachte Drehmoment durch die Eigenelastizität des Gummiprofils möglichst wenig beeinträchtigt wird.

In einer vorteilhaften Weiterbildung der Erfindung hat der Führungskopf ein Hohlprofil, dessen Kontur zumindest ungefähr der Außenkontur des Gummiprofils entspricht. Durch dieses Hohlprofil wird das Gummiprofil vor dem Aufbringen auf den Träger hindurchgeführt. Hierdurch wird erreicht, dass sich das Gummiprofil beim Aufbringen auf den Träger und beim Einleiten des magnetischen Drehmomentes von der Treibrolle möglichst wenig deformiert. Diese Ausführungsform der Erfindung stützt somit die konstanten Betriebsbedingung hinsichtlich des konstanten Drehmoments, um somit eine definierte und konstante Umgebung für die Aufbringung des Gummiprofil zu schaffen , die zu einer deutlich verbesserten Adhäsion und Genauigkeit der Aufbringung der Aufbringung des Gummiprofils auf den Träger führt. Durch diese Ausführungsform lassen sich somit auch Gummiprofile in sehr exakter Weise positionieren, die z.B. in die Außenkontur eines Kraftfahrzeugs herausstehen.

Es erübrigt sich zu sagen, dass die Vorrichtung insbesondere für ein Gummiprofil mit einer selbstklebenden Fläche konzipiert ist, so dass das Gummiprofil nach dem Aufbringen auf dem Träger selbsttätig haften bleibt. Eine Klebeschicht kann jedoch alternativ mittels des Führungskopfes vor dem Aufbringen des Gummiprofils auf den Träger auf eine der beiden Komponenten aufgebracht werden.

Vorzugsweise ist der Führungskopf mit der Vorschubvorrichtung zusammen in einem Gehäuse angeordnet, so dass die effektiven Komponenten des Führungskopfes, wie z.B. der Antriebsmotor, die Dauerschlupfkupplung, die Treibrolle und evtl. eine Gegenrolle in der Arbeitsumgebung geschützt angeordnet sind. Dies verringert u.a. auch die Unfallgefahr am Arbeitsplatz, während es andererseits sicherstellt, dass die einzelnen Komponenten im Führungskopf gegen versehentliche Beschädigung durch Fremdeinwirkung geschützt werden. Die im Gehäuse angeordneten Komponenten sind so auch besser vor Verschmutzung geschützt.

Vorzugsweise weist die Vorschubvorrichtung eine Gegenrolle auf, die im Lauf des Gummiprofils gegenüber der Treibrolle angeordnet isst, wobei zwischen der Treibrolle und der Gegenrolle ein Aufnahmebereich für wenigstens einen Teil des Gummiprofils gebildet ist. Auf diese Weise hat die Friktion bzw. der Eingriff der Treibrolle an dem Gummiprofil nicht die Aufgabe, eine Friktion zu überwinden, die dadurch entsteht, dass das Gummiprofil an einer festen Wand des Führungskopfes entlang gleitet. Es wird hiermit sichergestellt, dass das Drehmoment der Treibrolle auch tatsächlich in den Vorschub des Gummiprofils geht und nicht als Friktionsverlust verloren geht.

Es ist ebenfalls möglich, die Vorschubvorrichtung mit einer weiteren Treibrolle zu versehen, die gegenüber der Treibrolle angeordnet ist, wobei zwischen der Treibrolle und der weiteren Treibrolle ein Aufnahmebereich für wenigstens einen Teil des Gummiprofils gebildet ist. Auch diese Ausführungsform stellt sicher, dass das von den Treibrollen aufgebrachte Drehmoment völlig in einen Vorschub des Gummiprofils umgesetzt wird.

In einer vorteilhaften Weiterbildung der Erfindung ist der Aufnahmebereich zwischen Treibrolle und Gegenrolle oder zwischen der Treibrolle und der weiteren Treibrolle für die Aufnahme eines massiven Teils des Gummiprofils konzipiert. Insbesondere Gummiprofile im Kfz-Bereich enthalten in der Regel ein Hohlprofil, um die nötige Elastizität bereitzustellen, die für eine sichere Abdichtung des Türbereiches oder Kofferraumbereichs notwendig ist. Ein Hohlprofil hat wiederum den Nachteil, dass es bei Krafteinleitung sehr stark nachgibt, was erschwert, eine Kraft definiert auf das Hohlprofil einzuleiten. In der Regel haben derartige Hohlprofile jedoch auch einen massiven Teil insbesondere in dem Abschnitt, in welchem das Gummiprofil auf den Träger verklebt wird. Vorzugsweise ist der Aufnahmebereich exakt für diesen massiven Teil vorgesehen, so dass das aufgebrachte Drehmoment nicht in einer Verformung des Gummiprofils umgesetzt wird, sondern tatsächlichen Vorschub.

Um die Aufbringungsbedingungen zu standardisieren, kann die Vorrichtung zum Applizieren des Gummiprofils zusätzlich eine Andruckvorrichtung zum Andrücken des applizierten Gummiprofils auf den Träger aufweisen. Diese Andruckvorrichtung kann z.B. in dem Führungskopf integriert ausgebildet oder zusätzlich an diesem angebracht sein. Sie kann Rollen umfassen, die auf einen Teil des Gummiprofils einwirken, um diese gegen den Träger zu drücken. Auf diese Weise wird eine definierte Aufbringung des Gummiprofils auf den Träger gewährleistet.

Die Erfindung betrifft ebenfalls ein Verfahren zum Applizieren eines Gummiprofils auf einen Träger unter Nutzung einer Führungsvorrichtung mit einem Führungselement, um das Gummiprofil in einer definierten Stellung relativ zum Träger zuzuführen, wobei eine Vorschubvorrichtung verwendet wird, um das Gummiprofil mit einer gewissen Stauchung dem Träger zuzuführen, welche Vorrichtung wenigstens eine angetriebene Treibrolle mit einer Umlauffläche hat, die mit dem Gummiprofil in Friktions- und/oder Formeingriff steht. Erfindungsgemäß wird die Treibrolle über eine Dauerschlupfkupplung mit einem konstanten Drehmoment angetrieben. Auf diese Weise wird sichergestellt, dass die Treibrolle immer mit einem konstanten Drehmoment auf das Gummiprofil einwirkt, unabhängig von der Aufbringungsgeschwindigkeit des Gummiprofils. Die auf die Dauerschlupfkupplung wirkende Antriebseinrichtung, z.B. Antriebsmotor muss daher nur eine Antriebsgeschwindigkeit bereitstellen, die in jedem Fall höher ist als die Aufbringungsgeschwindigkeit des Gummiprofils auf den Träger. Der Geschwindigkeitsunterschied zwischen Antriebsgeschwindigkeit vor der Dauerschlupfkupplung und der Antriebsgeschwindigkeit im Bereich des Eingriffes der Treibrolle auf das Gummiprofil wird somit durch die Dauerschlupfkupplung in Form eines konstanten Drehmoments zur Verfügung gestellt.

Nachfolgend wird die Erfindung beispielsweise anhand der schematischen Zeichnung beschrieben. In dieser zeigen:
- Fig. 1: eine Querschnittsfläche eines Vollgummiprofils welches mittels einer Vorschubvorrichtung mit zwei Treibrollen über Dauerschlupfkupplungen angetrieben werden;
- Fig. 2: eine Seitenansicht eines Führungskopfes mit einer Vorschubvorrichtung zum Aufbringen des Gummiprofils auf einen Träger;
- Fig. 3: ein herkömmliches Gummiprofil, wie es im Kraftfahrzeugbau zwischen Tür und Türeinfassung eines Kraftfahrzeugchassis verwendet wird, und
- Fig. 4: einen Querschnitt durch eine Treibrolle und Gegenrolle in der erfindungsgemäßen Vorrichtung im Eingriff mit dem Gummiprofil aus Fig. 3.

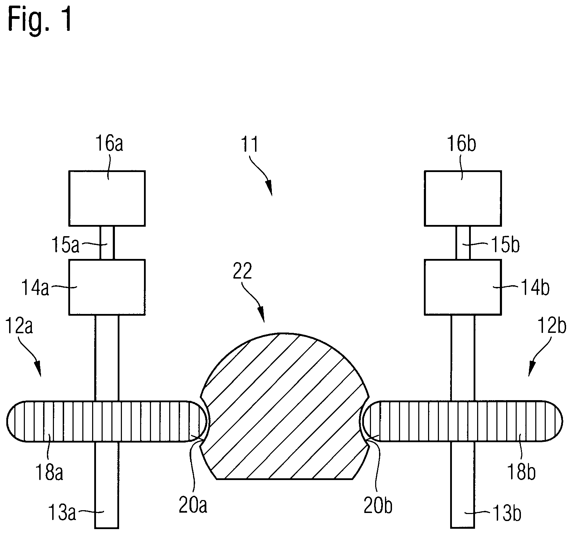

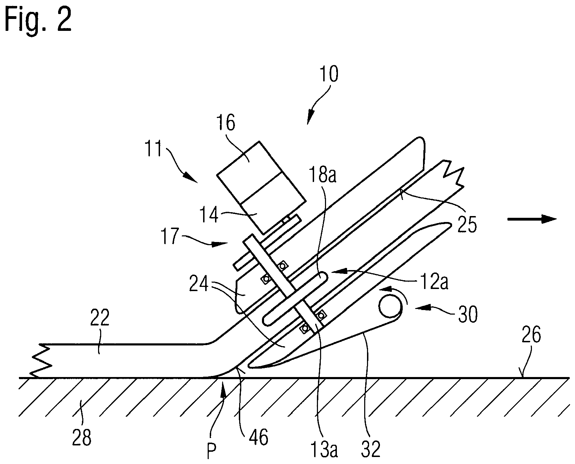

Fig. 1 zeigt eine Vorschubvorrichtung 11 umfassend zwei Treibrollen 12a, 12b, die von Antriebsmotoren 16a, 16b mittels Antriebswellen 15a,b über Dauerschlupfkupplungen 14a, 14b und Abtriebswellen 13a,b derart angetrieben sind, dass sie jeweils mit ihrem Außenumfang 18a, 18b auf eine Oberfläche 20a, 20b eines Gummiprofils 22 einwirken. Diese Einwirkung kann in der Form eines Friktionseingriffs oder eines teilweisen Formeingriffs (bei Außenumfang 18a,b der Treibrolle 12a,b aus strukturiertem Metall) vorliegen.
Die Vorschubvorrichtung 11 ist Teil eines Führungskopfes 10, wie er beispielsweise in Fig. 2 gezeigt ist. Die beiden Oberflächen 20a, 20b des Gummiprofils 22 befinden sich auf einander abgewandten Seiten des Gummiprofils, so dass die Umfänge 18a, 18b der Treibrollen 12a, 12b gegeneinander gerichtet sind, wodurch keine Reibungsverluste beim Vortritt des Gummiprofils entstehen. Das Gummiprofil 22 wird mittels der Dauerschlupfkupplung nicht mit einer definierten Geschwindigkeit sondern mit einem definierten Drehmoment auf den Träger aufgebracht, so dass es beim Aufbringen immer etwas gestaucht wird, unabhängig von der Geschwindigkeit des Führungskopfes 10 relativ zum Träger (Siehe Fig. 2). Ein derartiger Führungskopf 10 wird üblicherweise mittels eines Roboterarms über den Träger, z.B. über die Fläche eines Autochassis bewegt. Die Antriebsgeschwindigkeit der Antriebsmotoren 16a, 16b wenn diese direkt mittels der Treibrolle auf das Gummiprofil wirken würden ist hierbei immer höher als es der Geschwindigkeit des Führungskopfes relativ zum Träger entspricht. Der Geschwindigkeitsunterschied wird in der Dauerrutschkupplung 14a, 14b in ein konstantes Drehmoment umgesetzt, so dass das Gummiprofil 22 mittels der Treibrolle 12a, 12b immer mit einem konstanten Drehmoment auf den Träger aufgebracht wird.

Fig. 2 zeigt eine Seitenansicht eines Führungskopfes 10 mit der Vorschubvorrichtung 11 aus Fig. 1. Identische oder funktionsgleiche Teile sind in den Figuren mit identischen Bezugszeichen versehen. In Figur 2 enthält die Vorschubvorrichtung 11 zusätzlich ein Getriebe 17, um das Vorschubmoment von der das Dauerschlupfkupplung 14 auf die Treibrolle zu übertragen. Der Führungskopf 10 enthält des Weiteren ein Mundstück 24, welches ein Hohlprofil aufweist, das genau der Außenkontur des Gummiprofils entspricht. Hierdurch wird erreicht, dass sich das Gummiprofil 22 im Einwirkungsbereich der Treibrollen 12a, 12b nicht deformiert. Wie in der Figur deutlich zu sehen ist, sind zudem die Treibrollen 12a, 12b unmittelbar vor dem Aufbringungspunkt P des Gummiprofils 22 auf der Oberfläche 26 des Trägers 28 angeordnet. Optional kann am Punkt P oberhalb des Gummiprofils 22 noch eine Andruckrolle vorgesehen sein, um die
Oberseite des Gummiprofils 22 mit einer definierten Kraft gegen die Oberfläche 26 des Trägers 28 zu drücken. Die Bewegungsgeschwindigkeit V des Führungskopfes 10 relativ zur Oberfläche 26 des Trägers 28 ist immer geringer als es die Antriebsgeschwindigkeit der Treibrollen 12 bei direktem Antrieb durch den Antriebsmotor 16a,b entsprechen würde. Der Geschwindigkeitsunterschied wird in der Dauerrutschkupplung 14a,b in ein konstantes Drehmoment (und Wirbelstromverluste bzw. Wärme) umgewandelt, mit welchem die Treibrollen 12a,b auf das Gummiprofil 12 einwirkt, um dieses mit einer definierten Stauchung auf die Oberfläche 26 des Trägers 28 zu überführen. Das Gummiprofil 22 hat ein bei an der Oberfläche 26 des Trägers 28 zugewandten Unterseite eine Klebefläche 46, so dass nach dem Aufbringen des Gummiprofils 22 auf die Oberfläche dieses an den Träger 28 anhaftet. Der Führungskopf 10 enthält weiterhin eine Abziehvorrichtung 30, um ein Schutzband 32 von der Klebefläche 46 des Gummiprofils 22 abzuziehen, bevor dieses auf die Oberfläche 26 des Trägers 28 aufgebracht wird. Das Schutzband 32 deckt die Klebefläche 46 vor dem Aufbringen auf die Oberfläche 26 des Trägers 28 ab und sorgt dafür, dass das Gummiprofil 22 nicht bereits in dem Führungskopf 10 kleben bleibt und insgesamt einfacher zu handhaben ist. Die nicht dargestellte Führungsvorrichtung zum Antreiben des Führungskopfes 10 besteht üblicherweise aus einem Roboterarm, der mit mehreren Freiheitsgraden betätigbar ist. Dieser ist an sich bekannt und wird deshalb hier nicht näher erläutert.

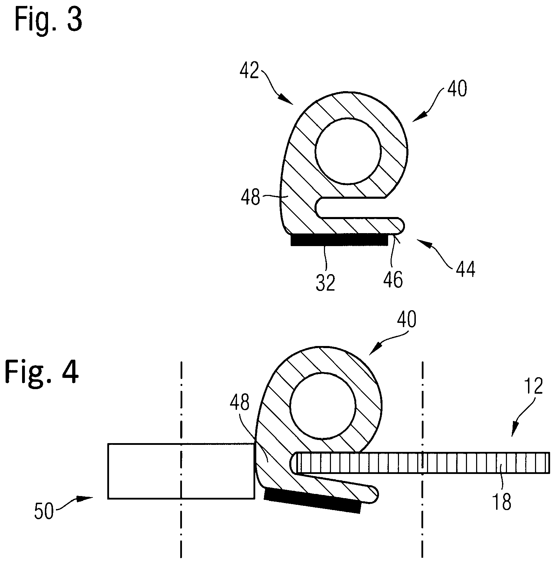

Fig. 3 zeigt ein Gummiprofil 40, welches zum Applizieren auf einer Türeinfassung oder Kofferraumeinfassung eines Kraftfahrzeugchassis verwendet wird. Das Gummiprofil 40 umfasst einen elastischen Hohlprofilabschnitt 42 und einen massiven Applizierungsabschnitt 44, welcher an seiner Unterseite eine Klebefläche 46 aufweist, die durch ein Abdeckband 32 abgedeckt ist. Das Abdeckband wird, wie es in Fig. 2 gezeigt ist, erst unmittelbar vor dem Aufbringen des Gummiprofils auf die Oberfläche des Kraftfahrzeugchassis abgezogen.

Der massive Applizierungsabschnitt 44 ist mit dem Hohlprofilabschnitt 42 über einen massiven Gummisteg 48 verbunden, welcher, wie es in Fig. 4 gezeigt ist, von einer Treibrolle 12 und einer Gegenrolle 50 der erfindungsgemäßen Applizierungseinrichtung beidseitig gegriffen werden kann, um das Gummiprofil 40 in Richtung auf den Träger zu bewegen. Die Gegenrolle 50 führt dazu, dass das beim Einwirken der Treibrolle 12 auf den massiven Steg 48 des Gummiprofils 40 übertragene Drehmoment nicht in Reibung umgesetzt wird, sondern in einen reinen Vortrieb des Gummiprofils. Auf diese Weise wird erreicht, dass das auf das Gummiprofil 40 aufgebrachte Drehmoment mittels der Treibrolle 12 auch tatsächlich in den Vorschub geht und nicht in Form von Reibungsenergie zwischen feststehenden Teilen des Führungskopfes 10 und dem Gummiprofil 40 verlorengeht.

Die Erfindung ist nicht auf das aufgeführte Ausführungsbeispiel beschränkt, sondern kann innerhalb des Schutzbereichs der nachfolgenden Ansprüche variiert werden.

## Patentansprüche

1. Vorrichtung zum Applizieren eine Gummiprofils (22; 40) auf einen Träger (28), umfassend eine Führungsvorrichtung mit einem Führungselement (10), um das Gummiprofil in einer definierten Stellung relativ zum Träger zuzuführen, und eine Vorschubvorrichtung (11), um das Gummiprofil dem Träger mit einer gewissen Stauchung zuzuführen, welche Vorschubvorrichtung wenigstens eine angetriebene Treibrolle (12a,b) mit eine Antriebsfläche (18a,b) aufweist, die mit dem Gummiprofil in Friktions- und/oder Formeingriff steht, **dadurch gekennzeichnet, dass** die Treibrolle mit einem konstanten Drehmoment auf das Gummiprofils einwirkt, und dass die Treibrolle (12a,b) über eine Dauerschlupfkupplung (14a,b) mit einem Antriebsmotor (16a,b) verbunden ist.

2. Vorrichtung nach Anspruch 1, **dadurch gekennzeichnet, dass** die Dauerschlupfkupplung (14a,b) durch eine nach dem magnetischen Hystereseprinzip arbeitende Dauerschlupfkupplung gebildet ist.

3. Vorrichtung nach einem der vorhergehenden Ansprüche, **dadurch gekennzeichnet, dass** die Treibrolle (12a,b) unmittelbar vor dem Aufbringungsort des Gummiprofils (22; 40) auf dem Träger (28) angeordnet ist.

4. Vorrichtung nach einem der vorhergehenden Ansprüche, **dadurch gekennzeichnet, dass** die Führungsvorrichtung ein Führungselement (24) mit einem Hohlprofil (24) enthält, dessen Kontur exakt der Außenkontur des Gummiprofils (22; 40) entspricht.

5. Vorrichtung nach Anspruch 4, **dadurch gekennzeichnet, dass** das Führungselement (10) mit der Vorschubvorrichtung (11) zusammen in einem Gehäuse angeordnet ist.

6. Vorrichtung nach einem der vorhergehenden Ansprüche, **dadurch gekennzeichnet, dass** die Vorschubvorrichtung (11) eine Gegenrolle (50) aufweist, die gegenüber der Treibrolle (12) angeordnet ist, wobei zwischen der Treibrolle und der Gegenrolle ein Aufnahmebereich für wenigstens einen Teil (48) des Gummiprofils (40) gebildet ist.

7. Vorrichtung nach einem der vorhergehenden Ansprüche, **dadurch gekennzeichnet, dass** die Vorschubvorrichtung (11) eine weitere Treibrolle (12b) aufweist, die gegenüber der Treibrolle (12a) angeordnet ist, wobei zwischen der Treibrolle (12a) und der weiteren Treibrolle (12b) ein Aufnahmebereich für wenigstens einen Teil des Gummiprofils (22) gebildet ist.

8. Vorrichtung nach Anspruch 6 oder 7, **dadurch gekennzeichnet, dass** der Aufnahmebereich zur Aufnahme eines massiven Teils (48) des Gummiprofils (22; 40) konzipiert ist.

9. Vorrichtung nach einem der vorhergehenden Ansprüche, **dadurch gekennzeichnet, dass** sie eine Andruckvorrichtung zum Andrücken des applizierten Gummiprofils (22; 40) auf den Träger (28) aufweist.

10. Vorrichtung nach einem der vorhergehenden Ansprüche, **dadurch gekennzeichnet, dass** die Führungsvorrichtung einen mit mehreren Freiheitsgraden bewegbaren Roboterarm aufweist, der die Vorschubvorrichtung (11) und das Führungselement (10) relativ zum Träger (28) bewegt.

11. Vorrichtung nach einem der vorhergehenden Ansprüche, **dadurch gekennzeichnet, dass** das Führungselement (10) eine Abziehvorrichtung (30) zum Entfernen eines Abdeckbands von einer Klebefläche des Gummiprofils (22; 40) aufweist.

12. Vorrichtung nach einem der vorhergehenden Ansprüche, **dadurch gekennzeichnet, dass** die Antriebsfläche (18a,b) der Treibrolle (12a,b) durch eine strukturierte, insbesondere parallel zu deren Rotationsachse geriffelte Umfangsfläche der Treibrolle gebildet ist.

13. Verfahren zum Aufbringen eines Gummiprofils (22; 40) auf einen Träger (28) mittels eines Führungselements, das relative zum Träger bewegt wird, **dadurch gekennzeichnet, dass** das Gummiprofil mit einem definierten konstanten Drehmoment mittels einer Dauerschlupfkupplung auf den Träger ausgeschoben wird.

14. Verfahren nach Anspruch 13, **dadurch gekennzeichnet, dass** das konstante Drehmoment mittels einer Treibrolle (12a,b) auf das Gummiprofil (22; 40) übertragen wird, die mit dem Gummiprofil in Friktions- und/oder Formeingriff steht.

## Claims

1. A device for applying a rubber profile (22; 40) to a carrier (28), comprising a guide device having a guide element (10) for feeding the rubber profile in a defined position relative to the carrier, and a feed device (11) for feeding the rubber profile to the carrier with a certain compression, which feed device has at least one driven drive roller (12a, b) with a drive surface (18a, b) which is in frictional and/or form-fitting engagement with the rubber profile, **characterized in that** the drive roller acts with a constant torque on the rubber profile, and that the drive roller (12a, b) is connected to a drive motor (16a, b) via a continuous slip clutch (14a, b).

2. The device according to claim 1, **characterized in that** the continuous slip clutch (14a, b) is formed by a continuous slip clutch operating according to the magnetic hysteresis principle.

3. The device according to one of the preceding claims, **characterized in that** the drive roller (12a, b) is arranged directly in front of the application location of the rubber profile (22; 40) on the carrier (28).

4. The device according to one of the preceding claims, **characterized in that** the guide device contains a guide element (24) with a hollow profile (24), the contour of which corresponds exactly to the outer contour of the rubber profile (22; 40).

5. The device according to claim 4, **characterized in that** the guide element (10) is arranged together with the feed device (11) in a housing.

6. The device according to one of the preceding claims, **characterized in that** the feed device (11) has a counter roller (50) which is arranged opposite the drive roller (12), wherein a receiving region for at least a part (48) of the rubber profile (40) is formed between the drive roller and the counter roller.

7. The device according to one of the preceding claims, **characterized in that** the feed device (11) has a further drive roller (12b) which is arranged opposite the drive roller (12a), wherein a receiving region for at least a part of the rubber profile (22) is formed between the drive roller (12a) and the further drive roller (12b).

8. The device according to claim 6 or 7, **characterized in that** the receiving region is configured for receiving a solid part (48) of the rubber profile (22; 40).

9. The device according to any one of the preceding claims, **characterized in that** it includes a pressure device for pressing the applied rubber profile (22; 40) onto the carrier (28).

10. The device according to any one of the preceding claims, **characterized in that** the guide device comprises a robot arm movable with several degrees of freedom, which moves the feed device (11) and the guide element (10) relative to the carrier (28).

11. The device according to any one of the preceding claims, **characterized in that** the guide element (10) comprises a peeling device (30) for removing a covering strip from an adhesive surface of the rubber profile (22; 40).

12. The device according to any one of the preceding claims, **characterized in that** the drive surface (18a, b) of the drive roller (12a, b) is formed by a structured circumferential surface of the drive roller, which is in particular ribbed parallel to the drive roller's axis of rotation.

13. A method for applying a rubber profile (22; 40) to a support (28) by means of a guide element which is moved relative to the carrier, **characterized in that** the rubber profile is pushed onto the carrier at a defined constant torque by means of a continuous slip clutch.

14. The method according to claim 13, **characterized in that** the constant torque is transmitted to the rubber profile (22; 40) by means of a drive roller (12a, b), which is in frictional and/or form-fitting engagement with the rubber profile.

## Revendications

1. Dispositif destiné à appliquer un profilé en caoutchouc (22 ; 40) sur un support (28), comprenant un dispositif de guidage muni d'un élément de guidage (10) afin de guider le profilé en caoutchouc dans une position définie par rapport au support, et comprenant un dispositif d'avancement (11) afin d'amener le profilé en caoutchouc vers le support avec une certaine compression, lequel dispositif d'avancement présente au moins un rouleau d'entraînement (12a, b) entraîné, doté d'une surface d'entraînement (18a, b) qui est en prise avec le profilé en caoutchouc par friction et/ou adhérence de forme, **caractérisé en ce que** le rouleau d'entraînement agit sur le profilé en caoutchouc avec un couple constant et **en ce que** le rouleau d'entraînement (12a, b) est relié à un moteur d'entraînement (16a, b) par un accouplement de glissement continu (14a, b).

2. Dispositif selon la revendication 1, **caractérisé en ce que** l'accouplement de glissement continu (14a, b) est formé par un accouplement de glissement continu fonctionnant selon le principe d'hystérèse magnétique.

3. Dispositif selon l'une quelconque des revendications précédentes, **caractérisé en ce que** le rouleau d'entraînement (12a, b) est disposé directement devant l'endroit de placement du profilé en caoutchouc (22 ; 40) sur le support (28).

4. Dispositif selon l'une quelconque des revendications précédentes, **caractérisé en ce que** le dispositif de guidage comporte un élément de guidage (24) muni d'un profilé creux (24) dont le contour correspond exactement au contour extérieur du profilé en caoutchouc (22 ; 40).

5. Dispositif selon la revendication 4, **caractérisé en ce que** l'élément de guidage (10) est disposé dans un boîtier conjointement avec le dispositif d'avancement (11).

6. Dispositif selon l'une quelconque des revendications précédentes, **caractérisé en ce que** le dispositif d'avancement (11) présente un contre-rouleau (50) qui est disposé à l'opposé du rouleau d'entraînement (12), une zone de logement étant formée entre le rouleau d'entraînement et le contre-rouleau pour au moins une partie (48) du profilé en caoutchouc (40).

7. Dispositif selon l'une quelconque des revendications précédentes, **caractérisé en ce que** le dispositif d'avancement (11) présente un rouleau d'entraînement supplémentaire (12b) qui est disposé à l'opposé du rouleau d'entraînement (12a), une zone de logement étant formée entre le rouleau d'entraînement (12a) et le rouleau d'entraînement supplémentaire (12b) pour au moins une partie du profilé en caoutchouc (22).

8. Dispositif selon la revendication 6 ou 7, **caractérisé en ce que** la zone de logement est conçue pour loger une partie massive (48) du profilé en caoutchouc (22 ; 40).

9. Dispositif selon l'une quelconque des revendications précédentes, **caractérisé en ce qu'**il présente un dispositif de pression destiné à presser sur le support (28) le profilé en caoutchouc (22 ; 40) appliqué.

10. Dispositif selon l'une quelconque des revendications précédentes, **caractérisé en ce que** le dispositif de guidage présente un bras de robot déplaçable avec plusieurs degrés de liberté, lequel déplace le dispositif d'avancement (11) et l'élément de guidage (10) par rapport au support (28).

11. Dispositif selon l'une quelconque des revendications précédentes, **caractérisé en ce que** l'élément de guidage (10) présente un dispositif de retrait (30) destiné à retirer une bande de recouvrement d'une surface adhésive du profilé en caoutchouc (22 ; 40).

12. Dispositif selon l'une quelconque des revendications précédentes, **caractérisé en ce que** la surface d'entraînement (18a, b) du rouleau d'entraînement (12a, b) est formée par une surface circonférentielle structurée du rouleau d'entraînement, notamment rainurée parallèlement à l'axe de rotation du rouleau d'entraînement.

13. Procédé d'application d'un profilé en caoutchouc (22 ; 40) sur un support (28) au moyen d'un élément de guidage qui est déplacé par rapport au support, **caractérisé en ce que** le profilé en caoutchouc est poussé sur le support avec un couple constant défini au moyen d'un accouplement de glissement continu.

14. Procédé selon la revendication 13, **caractérisé en ce que** le couple constant est transmis sur le profilé en caoutchouc (22 ; 40) au moyen d'un rouleau d'entraînement (12a, b), qui est en prise avec le profilé en caoutchouc par friction et/ou par adhérence de forme.
